(19) Europäisches Patentamt
European Patent Office
Office européen des brevets

(11) EP 2 728 710 B1

(12) **EUROPEAN PATENT SPECIFICATION**

(45) Date of publication and mention
of the grant of the patent:
**01.11.2017 Bulletin 2017/44**

(21) Application number: **12804090.4**

(22) Date of filing: **27.06.2012**

(51) Int Cl.:
*H01F 38/14* (2006.01)         *H03H 7/40* (2006.01)
*B60L 11/18* (2006.01)         *B60L 3/00* (2006.01)
*H02J 7/02* (2016.01)

(86) International application number:
**PCT/JP2012/066333**

(87) International publication number:
**WO 2013/002241 (03.01.2013 Gazette 2013/01)**

(54) **ELECTRICAL SUPPLY SYSTEM**

ELEKTRISCHES VERSORGUNGSSYSTEM

SYSTÈME D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011   JP 2011145297
25.07.2011   JP 2011162508**

(43) Date of publication of application:
**07.05.2014   Bulletin 2014/19**

(73) Proprietor: **Yazaki Corporation
Minato-ku
Tokyo 108-8333 (JP)**

(72) Inventors:
• **OOKAWA, Masamitsu
Yokosuka-shi
Kanagawa 237-0061 (JP)**
• **TANAKA, Shingo
Yokosuka-shi
Kanagawa 237-0061 (JP)**

• **TAGUCHI, Noritaka
Yokosuka-shi
Kanagawa 237-0061 (JP)**

(74) Representative: **Grünecker Patent- und
Rechtsanwälte
PartG mbB
Leopoldstraße 4
80802 München (DE)**

(56) References cited:
**EP-A1- 2 325 037         WO-A1-2010/030005
WO-A1-2010/090539       JP-A- 2012 138 976
US-A1- 2010 115 474       US-A1- 2010 123 452
US-A1- 2010 123 452**

• **ANDRE KURS ET AL.: 'Wireless Power Transfer
via Strongly Coupled Magnetic Resonances'
SCIENCE vol. 317, 06 July 2007, pages 83 - 86,
XP008154870**
• **MARIN SOLJACIC ET AL.: 'Wireless technology
developed to transmit power lights up a 60W bulb
in tests' NIKKEI ELECTRONICS 03 December
2007, pages 117 - 128, XP008154918**

EP 2 728 710 B1

**Description**

TECHNICAL FIRLD

The present invention relates to a power supply system, specifically to a power supply system supplying electric power in a non-contact fashion from a power supply side coil to a power reception side coil.

BACKGROUND ART

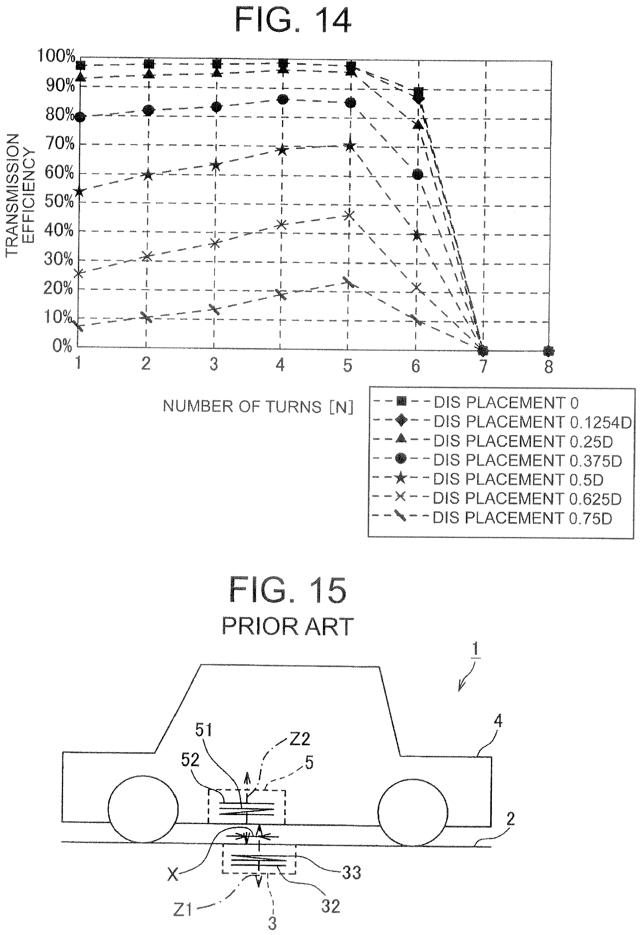

Fig. 15 shows a known example of such power supply system (refer for example to Literatures 1 and 2). As shown in Fig. 15, a power supply system 1 includes a power supply part 3 as a power supply unit and a power reception part 5 as a power reception unit. The power supply part 3 includes a power supply side loop antenna 32 to which power is supplied and a power supply side helical coil 33 as a power supply side coil electromagnetically-coupled to the power supply side loop antenna 32 and arranged apart from and opposed to the power supply side loop antenna 32 along a center axis direction of the power supply side loop antenna 32.

The power reception part 5 includes a power reception side helical coil 51 as a power reception side coil arranged apart from and opposed to the power supply side helical coil 33 along a center axis direction of the power supply side helical coil 33 for electromagnetic resonance, and a power reception side loop antenna 52 arranged apart from and opposed to the power reception side helical coil 51 along a center axis direction of the power reception side helical coil 51 and electromagnetically-coupled to the power reception side helical coil 51. Once power is transmitted to the power supply side helical coil 33, then this power is transmitted wirelessly to the power reception side helical coil 51 through electromagnetic resonance.

Once the power is transmitted to the power reception side helical coil 51, this power is transmitted to the power reception side loop antenna 52 through electromagnetic induction and supplied to a load such as a battery connected to the power reception side loop antenna 52. According to the above-mentioned power supply system 1, the power can be supplied in a non-contact faction from the power supply side to the power reception side through electromagnetic resonance between the power supply side helical coil 33 and the power reception side helical coil 51.

Furthermore, by providing the power reception part 5 to a motor vehicle 4 and providing the power supply part 3 to a road 2 and such, the power can be supplied to a battery mounted to the motor vehicle 4 in a wireless fashion by using the power supply system 1 described above.

In the power supply system 1, the impedance of the power supply part 3 and the power reception part 5 is adjusted (i.e. the impedance of the power supply part 3 and the power reception part 5 is matched) such that the best transmitting efficiency is obtained under a condition in which a center axis Z1 of the power supply side helical coil 33 and a center axis Z2 of the power reception side helical coil 51 are aligned in a line with a lateral displacement x=0.

However, in the power supply system 1 described above, it is difficult to stop the motor vehicle 4 such that the center axis Z1 of the power supply side helical coil 33 and the center axis Z2 of the power reception side helical coil 51 are coaxially-positioned. Thus, as shown in Fig. 15, the lateral displacement x (>0) of the center axis Z1 with respect to the center axis Z2 may be formed.

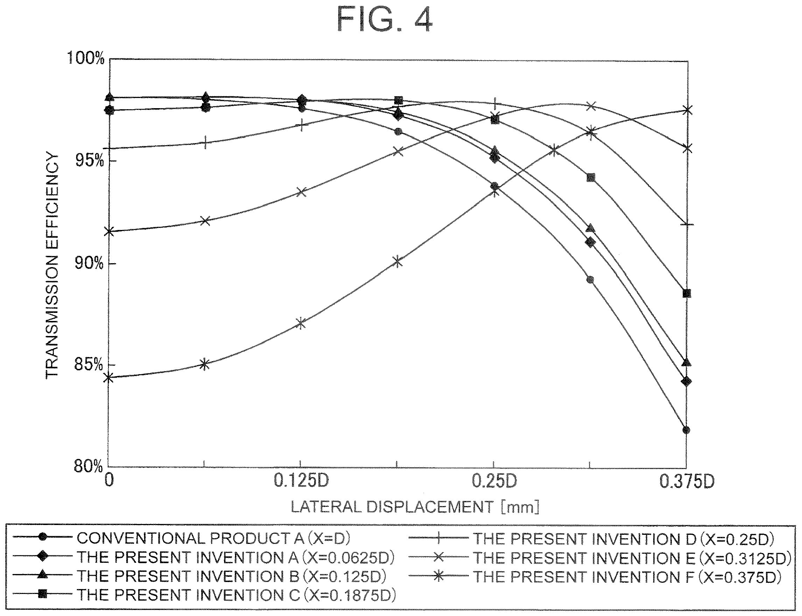

For the power supply system 1 according to the conventional product shown in Fig. 15 in which the impedances of the power supply part 3 and the power reception part 5 are matched in a state in which the lateral displacement between the center axes Z1, Z2 is x=0, the inventors simulated the transmission efficiency for the lateral displacement x ranging from 0 to 0.375D (D= the diameter of the power supply side helical coil 33 and the power reception side helical coil 51). The result is plotted with black circles in Fig. 4.

As shown in Fig. 4, there is a problem that, while the transmission efficiency is about 98% when the lateral displacement x is equal to 0, the transmission efficiency is decreased to 82% when the lateral displacement x is 0.375D.

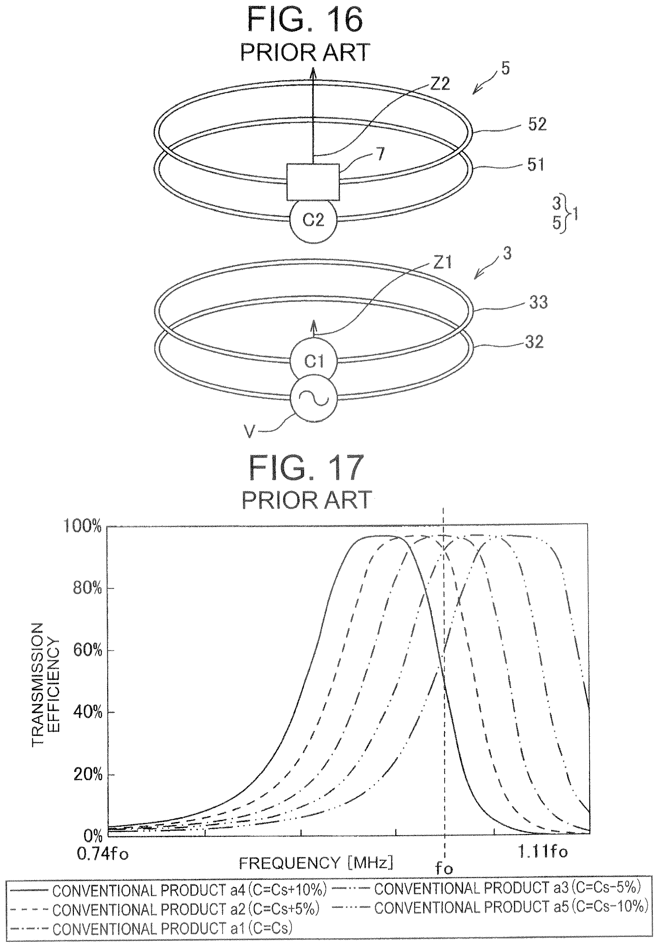

Furthermore, as shown in Fig. 16, another power supply system 1 has a capacitor C1, C2 connected to both ends of the power supply side helical coil 33 and the power reception side helical coil 51. The capacitors C1, C2 are provided for adjusting the resonant frequency and are set to a value which can obtain the desired resonant frequency f0 in accordance with the number of turns N in the power supply side helical coil 33 and the power reception side helical coil 51. In general, in this power supply system 1 provided with the capacitors C1, C2, the power supply side helical coil 31 and the power reception side helical coil 51 have the number of turns equal to 1.

However, in the above-mentioned power supply system 1 of the conventional product, there is a problem that, depending on a product, the transmission efficiency at the resonance frequency f0 is decreased. The inventors explored the cause of such problem and found out that such problem is caused by the variations in the capacitors C1, C2. In general, it is guaranteed that a commercial capacitor has the capacitance of about plus or minus 5% to about plus or minus 10%. Thus, the variation in the capacitors C1, C2 is expected to be within this range. Fig. 17 shows the result of the simulation of the transmission efficiency around the resonance frequency f0 when the capacitance of the capacitors C1, C2 varies for plus or minus 5% and plus or minus 10%.

As can be seen in Fig. 17, the transmission efficiency at the resonant frequency f0 is equal to or greater than 90% for the conventional product a1 in which the capacitance C of the capacitors C1, C2 is a desired capacitance Cs with no error, and for the conventional products a2, a3 having the error of no more than about plus or minus 5%. On the other hand, the transmission efficiency at the resonant frequency f0 is decreased to about 50% for the conventional products a4, a5 having the error of plus or minus 10%.

US patent application publication US 2010/115474 A1 describes an inductive power transmission apparatus having a resonance system. The output impedance of an alternating current source driving the system and the input impedance of the resonance system are matched to each other. For this purpose, the impedance of a primary coil inductively coupled to the primary side resonance coil (transmission coil) is adjustable and set so that the matching is achieved.

US patent application publication US 2010/123452 A1 describes an inductive power supply system, preferably for an electrically driven vehicle, wherein both the transmission and the receiving side each have two coils inductively coupled with each other (a power supply coil and a supply-side resonance coil/a power receiving coil and a receiving-side resonance coil, respectively). A position of the supply-side and receiving-side resonance coils is detected. Relative positions between the respective two coils on the supply side and between the respective two coils on the receiving side are adjusted based on the detection results, in order to enhance efficiency.

CITATION LIST

Literature 1: A. Kurs, A. Karalis, R. Moffatt, J.D. Joannopoulous, P. Fisher, M. Soljacic, "Wireless power transfer via strongly coupled magnetic resonances", Sience, Vol. 317, pp. 83-86, July 6, 2007
Literature 2: M. Soljacic, A. Karalis, J. Jonnopoulos, A. Kurs, R. Moffatt, P. fisgeR, "Development of technology for wireless power transfer - Lighting up 60W bulb in experiment", Nikkei Electronics, 3 Dec. 2007.

SUMMARY OF INVENTION

Object of the Invention

An object of the present invention is to provide a power supply system which can reduce a decrease in transmission efficiency caused by a lateral displacement of a power supply side coil with respect to a power reception side coil and which can thus supply power with high efficiency from a power supply unit to a power reception unit.

Furthermore, another object of the present invention is to provide a power supply system which can reduce a decrease in transmission efficiency caused by variations in capacitors.

Solution to Problem

In order to achieve the above-described object, the present invention provides, in a first aspect, a power supply system including: a power supply unit including a power supply side coil to which electric power is supplied; and a power reception unit including a power reception side coil arranged to electromagnetically resonate with the power supply side coil and receive the electric power from the power supply side coil, wherein impedances of the power supply unit and the power reception unit are matched at a position where a center axis of the power supply side coil is displaced with respect to a center axis of the power reception side coil.

In order to achieve the above-described object, the present invention provides, in a second aspect, the power supply system described above, wherein the power supply side coil and the power reception side coil are wound into a circular shape.

Advantageous Effects of Invention

As explained above, according to the invention described in the first aspect, impedances of the power supply unit and the power reception unit are matched at the position where the center axis of the power supply side coil is displaced with respect to the center axis of the power reception side coil. Thus, a decrease in transmission efficiency caused by a lateral displacement between the power supply side coil and the power reception side coil can be reduced, and power can be supplied with high efficiency from the power supply unit to the power reception unit.

According to the invention described in the second aspect, since the power supply side coil and the power reception side coil are wound into the circular shape, anisotropy in the transmission efficiency can be eliminated.

BRIEF DESCRIPTION OF DRAWINGS

Fig. 1 shows a power supply system according to a first embodiment of the present invention;
Fig. 2 is a perspective view of a power supply side loop antenna, a power supply side helical coil, a power reception side helical coil and a power reception side loop antenna constituting the power supply system of Fig. 1;
Fig. 3A illustrates a position which provides best transmission efficiency according to the present invention;
Fig. 3B illustrates a position which provides best transmission efficiency according to a conventional art;
Fig. 4 is a graph showing transmission efficiencies for displacement between center axes Z1, Z2 ranging from 0 to 0.375D, for a conventional product in which the impedances of a power supply part and a power reception part are matched when the lateral displacement x between the center axes is x=0, and for respective products A through F according to the present invention in which the impedances of a power supply part and a power reception part are matched when the lateral displacement x between the center axes is equal to 0.0625D, 0.125D, 0.1875D, 0.25D, 0.3125D and 0.375D;

Fig. 5 shows a power supply system according to a second embodiment provided for comparison;

Fig. 6 is a perspective view of a power supply side loop antenna, a power supply side helical coil, a power reception side helical coil and a power reception side loop antenna constituting the power supply system of Fig. 5;

Fig. 7 is a graph showing simulation results of transmission efficiency at resonant frequency f0 for comparative products "a" which are power supply systems with N=2, wherein a comparative product a1 has C=Cs, comparative products a2, a3 have C=Cs±5% and comparative products a4, a5 have C=Cs±10%;

Fig. 8 is a graph showing simulation results of transmission efficiency at resonant frequency f0 for products of the present invention "a" which are power supply systems with N=3, wherein a product of the present invention a1 has C=Cs, products of the present invention a2, a3 have C=Cs±5% and products of the present invention a4, a5 have C=Cs±10%;

Fig. 9 is a graph showing simulation results of transmission efficiency at resonant frequency f0 for products of the present invention "b" which are power supply systems with N=4, wherein a product of the present invention b1 has C=Cs, products of the present invention b2, b3 have C=Cs±5% and products of the present invention b4, b5 have C=Cs±10%;

Fig. 10 is a graph showing simulation results of transmission efficiency at resonant frequency f0 for products of the present invention "c" which are power supply systems with N=5, wherein a product of the present invention c1 has C=Cs, products of the present invention c2, c3 have C=Cs±5% and products of the present invention c4, c5 have C=Cs±10%;

Fig. 11 is a graph showing simulation results of maximum values and minimum values of transmission efficiency near resonant frequency f0 when the number of turns of the power supply side helical coil and the power reception side helical coil is changed to 1 through 8;

Fig. 12 illustrates positional displacement of the power supply side helical coil with respect to the power reception side helical coil;

Fig. 13 is a graph showing simulation results of transmission efficiency near resonant frequency f0 when the number of turns of the power supply side helical coil and the power reception side helical coil is changed to 1 through 5.7;

Fig. 14 is a graph showing simulation results of transmission efficiency near resonant frequency f0 for the power supply system when the positional displacement x is 0 through 0.75D, in which the number of turns of the power supply side helical coil and the power reception side helical coil is changed to 1 through 8;

Fig. 15 shows a conventional power supply system;

Fig. 16 shows a conventional power supply system; and

Fig. 17 is a graph showing simulation results of transmission efficiency at resonant frequency f0 for conventional products "a" which are power supply systems with N=1, wherein a conventional product a1 has C=Cs, conventional products a2, a3 have C=Cs±5% and conventional products a4, a5 have C=Cs±10%.

DESCRIPTION OF EXEMPLARY EMBODIMENTS

First embodiment

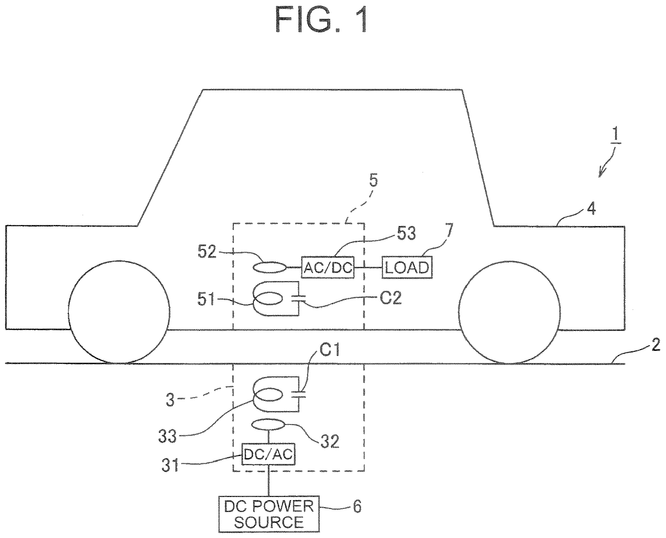

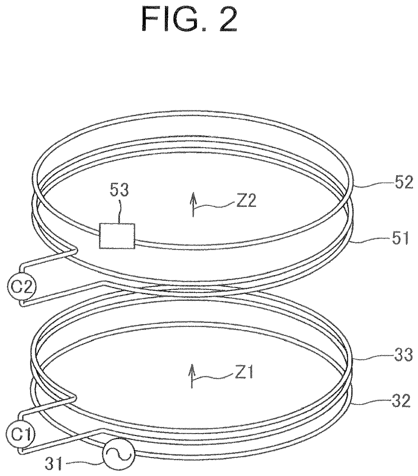

In the following, a power supply system according to a first embodiment of the present invention is explained in reference to Fig. 1 and Fig. 2. Fig. 1 shows a power supply system according to a first embodiment of the present invention. Fig. 2 is a perspective view of a power supply side loop antenna, a power supply side helical coil, a power reception side helical coil and a power reception side loop antenna constituting the power supply system of Fig. 1. As shown in these drawings, a power supply system 1 includes a power supply part 3 as a power supply unit provided on a road 2, for example, and a power reception part 5 as a power reception unit provided to a body portion of a motor vehicle 4, for example.

The power supply part 3 includes a DC/AC converter 31 which converts direct current power (DC power) supplied from a DC power source into alternating current power (AC power), a power supply side loop antenna 32 to which the AC power converted by the DC/AC converter 31 is supplied, a power supply side helical coil 33 as a power supply side coil arranged apart from and opposed to the power supply side loop antenna 32 along a center axis direction of the power supply side loop antenna 32 and electromagnetically-coupled to the power supply side loop antenna 32, and a capacitor C1 connected in parallel to the power supply side helical coil 33.

The power supply side loop antenna 32 is arranged into a form of a circular loop, and a center axis of the power supply side loop antenna 32 is arranged along a direction from the road 2 toward the body portion of the motor vehicle 4, i.e. a vertical direction. The DC/AC converter 31 is connected to both ends of this power supply side loop antenna 32, so that the AC power which is converted by the DC/AC converter 31 is supplied as describe above.

The power supply side helical coil 33 is formed by a winding wire wound into a circular helical shape. In this embodiment, the number of turns of the power supply side helical coil 33 is 2 turns. The power supply side helical coil 33 is arranged on the side of the power supply side loop antenna 32 adjacent to the motor vehicle 4 and arranged coaxially with the power supply side loop antenna 32. The power supply side loop antenna 32 and the power supply side helical coil 33 are spaced from each other within the range that the power supply side loop antenna 32 and the power supply side helical coil 33 will be electromagnetically-coupled to each other, i.e. within the range that electromagnetic induction is induced at the power supply side helical coil 33 when the AC power is supplied to the power supply side loop antenna 32 and the alternating current flows in the power supply side loop antenna 32. The capacitor C1 is provided to adjust the resonant frequency.

The power reception part 5 includes a power reception side helical coil 51 as a power reception side coil arranged to electromagnetically resonate with the power supply side helical coil 33, a power reception side loop antenna 52 arranged opposed to the power reception side helical coil 51 along a center axis direction of the power reception side helical coil 51 and electromagnetically-coupled to the power reception side helical coil 51, an AC/DC converter 53 converting the AC power received by the power reception side loop antenna 52 into DC power, and a capacitor C2 connected in parallel to the power reception side helical coil 51.

A load 7 such as a battery is connected to the power reception side loop antenna 52 via the AC/DC converter 53. The power reception side loop antenna 52 is arranged into a form of a circular loop, and a center axis of the power reception side loop antenna 52 is arranged along a direction from the body portion of the motor vehicle 4 toward the road 2, i.e. a vertical direction. In this embodiment, as shown in Fig. 2, the power reception side loop antenna 52 has the same diameter as the above-described power reception side loop antenna 32. However, the present invention is not limited to this, and the diameter of the power reception side loop antenna 52 may be smaller than the diameter of the power reception side loop antenna 32.

The power reception side helical coil 51 is formed by a winding wire wound into a circular helical shape. In this embodiment, the number of turns of the power reception side helical coil 51 is 2 turns, as the power supply side helical coil 33. The power reception side helical coil 51 has the same diameter as the power supply side helical coil 33. However, the present invention is not limited to this, and the diameter of the power reception side helical coil 51 may be smaller than the diameter of the power supply side helical coil 33.

The power reception side helical coil 51 is arranged on the side of the power reception side loop antenna 52 adjacent to the road 2 and arranged coaxially with the power reception side loop antenna 52. Thus, the power reception side loop antenna 52 and the power reception side helical coil 51 are spaced from each other within the range that the power reception side loop antenna 52 and the power reception side helical coil 51 will be electromagnetically-coupled to each other, i.e. within the range that the induction current is induced at the power reception side loop antenna 52 when the alternating current flows in the power reception side helical coil 51. Similar to the capacitor C1, the capacitor C2 is provided for adjustment of resonant frequency. The capacitance of these capacitors C1, C2 is adjusted in advance so that the resonant frequency of the power supply side helical coil 33 and the power reception side helical coil 51 is a desired frequency f0 (e.g. 10MHz).

According to the power supply system 1 described above, when the power reception part 5 of the motor vehicle 4 is moved toward the power supply part 3, and the power supply side helical coil 33 and the power reception side helical coil 51 are positioned oppositely along the center axis direction with a space between each other, the power supply side helical coil 33 and the power reception side helical coil 51 electromagnetically resonate with each other, thereby supplying power in a non-contact fashion from the power supply part 3 to the power reception part 5.

To be more specific, when the AC power is supplied to the power supply side loop antenna 32, this AC power is transmitted to the power supply side helical coil 33 through electromagnetic induction. In other words, the power is fed to the power supply side helical coil 33 through the power supply side loop antenna 32. When the power is transmitted to the power supply side helical coil 33, this power is transmitted wirelessly to the power reception side helical coil 51 through magnetic-field resonance. Furthermore, when the power is transmitted to the power reception side helical coil 51, thus power is transmitted to the power reception side loop antenna 52 through electromagnetic induction and supplied to the load 7 connected to this power reception side lop antenna 52 through the AC/DC converter 53.

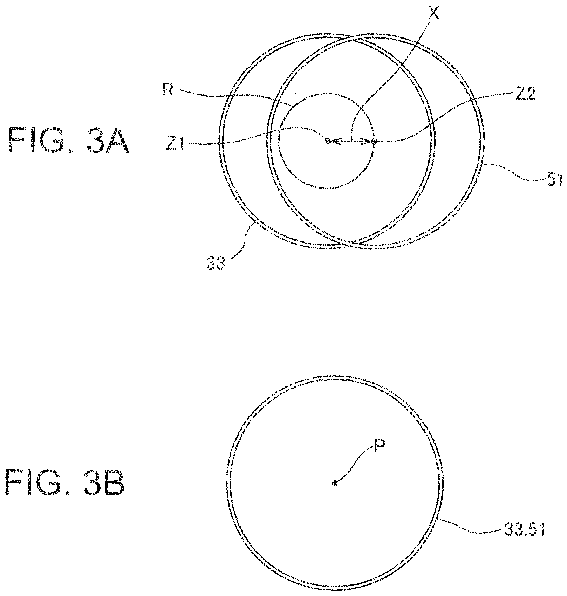

As shown in Fig. 3A, in the power supply system 1, the impedances of the power supply part 3 and the power reception part 5 are adjusted (i.e. the impedances of the power supply part 3 and the power reception part 5 are matched) so as to make the transmission efficiency to be greatest at the position where the center axes Z1, Z2 of the power supply side helical coil 33 and the power reception side helical coil 51 are laterally displaced for x (>0). This lateral displacement x between the center axes Z1, Z2 is within a range that the power supply side helical coil 33 and the power reception side helical coil 51 overlap one another in the center axis direction.

For example, a method for matching impedances of the power supply part 3 and the power reception part 5 includes, providing matching devices on both sides of the power supply side helical coil 33 and the power reception side helical coil 51, or of the power supply side loop antenna 32 and the power reception side loop antenna 52, and adjusting the impedance using this matching device, or adjusting the impedances of the DC/AC converter 31 and the AC/DC converter 53.

Referring to Fig. 3B, when the impedances of the power supply part 3 and the power reception part 5 are matched at a position where the lateral displacement x between the center axes Z1, Z2 is x=0, as is the case of the conventional art, the transmission efficiency becomes greatest at a point P on the center axis Z1, and the transmission efficiency decreases as the center axis Z2 of the power reception side helical coil 51 moves away from the point P.

In contrast, referring back to Fig. 3A, when the impedances of the power supply part 3 and the power reception part 5 are matched at the position where the center axes Z1, Z2 of the power supply side helical coil 33 and the power reception side helical coil 51 are displaced for x, the transmission efficiency becomes greatest on a circle R with a radius of x centered at the center axis Z1, and the transmission efficiency decreases as the center axis Z2 of the power reception side helical coil 51 moves away from the circle R. It is clear from Fig. 3A and Fig. 3B that, in the conventional art the transmission efficiency is greatest only at the point P, while in the present embodiment the transmission efficiency is greatest at points on the circle R. Thus, the decrease in the transmission efficiency caused by the positional displacement x of the power supply side helical coil 33 with respect to the power reception side helical coil 51 can be reduced, thereby supplying the power from the power supply part 3 to the power reception part 5 with high efficiency.

Next, the inventors of the present invention have simulated the transmission efficiency for the lateral displacement between the center axes Z1, Z2 ranging from 0 to 0.375D, for a conventional product in which the impedances of the power supply side helical coil 33 and the power reception side helical coil 51 are matched when the lateral displacement x between the center axes Z1, Z2 is x=0, as shown in Fig. 3B, and for respective products of the present invention A through F in which the impedances of the power supply side helical coil 33 and the power reception side helical coil 51 are matched when the lateral the displacement x between the center axes Z1, Z2 is equal to 0.0625D, 0.125D, 0.1875D, 0.25D, 0.3125D and 0.375D. The results are shown in Fig. 4.

As shown in Fig. 4, for the conventional product, the transmission efficiency at the lateral displacement x=0 is 98%, but is decreased to 82% at the lateral displacement x=0.375D. In contrast, for the products A, B of the present invention in which the impedances are matched at the lateral displacement x=0.0625D, 0.125D, the transmission efficiency at the lateral displacement x=0.375D is about 85%, i.e. the decrease in the transmission efficiency at x=0.375D can be reduced. Furthermore, for the product C of the present invention in which the impedances are matched at the lateral displacement x=0.1875D, the transmission efficiency at the lateral displacement x=0 is 97.5%, i.e. the transmission efficiency is slightly decreased, but the transmission efficiency at the lateral displacement x=0.375D is about 89%, i.e. the decrease in the transmission efficiency at x=0.375D can be reduced.

Furthermore, for the product D of the present invention in which the impedances are matched at the lateral displacement x=0.25D, the transmission efficiency at the lateral displacement x=0 is 95.5%, but the transmission efficiency at the lateral displacement x=0.375D is about 92%, i.e. the decrease in the transmission efficiency at x=0.375D can be reduced significantly. Furthermore, for the product E of the present invention in which the impedances are matched at the lateral displacement x=3125D, the transmission efficiency at the lateral displacement x=0 is decreased to 91%, but the transmission efficiency at the lateral displacement x=0.375D can be increased to 96%.

Furthermore, for the product F of the present invention in which the impedances are matched at the lateral displacement x=0.375D, the transmission efficiency at the lateral displacement x=0 is decreased to 84%, but the transmission efficiency at the lateral displacement x=0.375D can be increased to 98%. Thus, it is clear from the above results that, in the conventional product, the transmission efficiency is decreased to 82% when there is the lateral displacement x in a range from 0 to 0.375D, whereas the products A through F of the present invention can achieve the transmission efficiency of 84% or higher even if there is the lateral displacement x in a range from 0 to 0.375D. Thus, it is found that the products of the present invention reduces the decrease in the transmission efficiency caused by the lateral displacement, thus can supply power from the power supply part 3 to the power reception part 5 with high efficiency.

Furthermore, according to the embodiment described above, since the power supply side helical coil 33 and the power reception side helical coil 51 are wound into a circular shape, the anisotropy in the transmission efficiency can be eliminated.

In the above-described embodiment, the power supply side helical coil 33 and the power reception side helical coil 51 are wound into a circular shape; however the present invention is not limited to this. The shape of the power supply side helical coil 33 and the power reception side helical coil 51 can be the shape other than a circle such as a rectangle or a triangle.

Second Embodiment

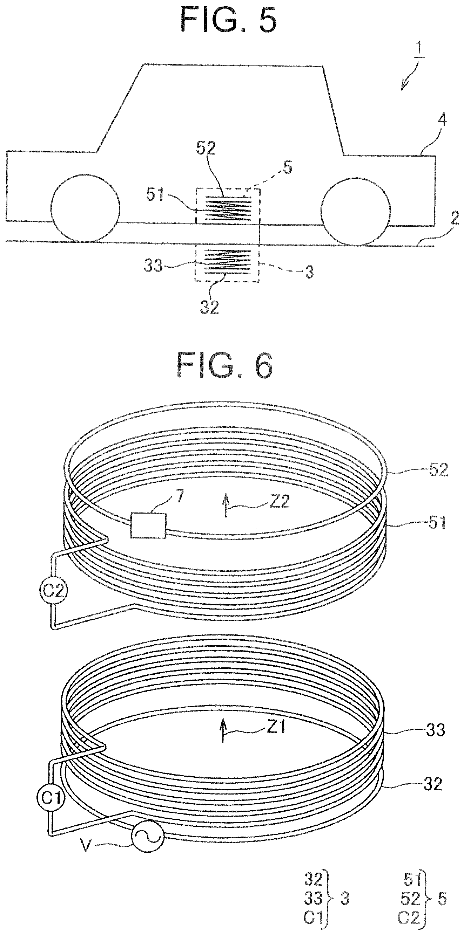

In the following, a power supply system according to a second embodiment provided for comparison is explained in reference to Fig. 5 and Fig. 6. Fig. 5 shows a power supply system according to a second embodiment of the present invention. Fig. 6 is a perspective view of a power supply side loop antenna, a power supply side helical coil, a power reception side helical coil and a power reception side loop antenna constituting the power supply system of Fig. 5. As shown in these drawings, a power supply system 1 includes a power supply part 3 provided on a road 2, for example, and a power reception part 5 provided to a body portion of a motor vehicle 4, for example.

The power supply part 3 includes a power supply side loop antenna 32 to which the AC power is supplied, a power supply side helical coil 33 arranged apart from and opposed to the power supply side loop antenna 32 along a center axis direction of the power supply side loop antenna 32 and electromagnetically-coupled to the power supply side loop antenna 32, and a capacitor C1 (see Fig. 6) connected to both ends of the power supply side helical coil 33.

The power supply side loop antenna 32 is formed by winding a conductive wire into a form of a circular loop, and the center axis of the power supply side loop antenna 32 is arranged along a direction from the road 2 toward the body portion of the motor vehicle 4, i.e. a vertical direction. An AC power source V is connected to both ends of this power supply side loop antenna 32 to supply AC power from the AC power source.

The power supply side helical coil 33 is formed by a conductive wire wound into a circular helical shape. In the examples shown in Fig. 5 and Fig. 6, the number of turns of the power supply side helical coil 33 is 5 turns. However, in the second embodiment, the number of turns is not limited to this, and can be between 3 turns to 6 turns. As shown in Fig. 6, the capacitor C1 for adjustment of resonant frequency is connected to both ends of the power supply side helical coil 33.

The power supply side helical coil 33 is arranged on the side of the power supply side loop antenna 32 adjacent to the motor vehicle 4 and arranged coaxially with the power supply side loop antenna 32. The power supply side loop antenna 32 and the power supply side helical coil 33 are spaced from each other within the range that the power supply side loop antenna 32 and the power supply side helical coil 33 will be electromagnetically-coupled to each other, i.e. within the range that electromagnetic induction is induced at the power supply side helical coil 33 when the AC power is supplied to the power supply side loop antenna 32 and the alternating current flows in the power supply side loop antenna 32.

The power reception part 5 includes a power reception side helical coil 51 arranged to electromagnetically resonate with the power supply side helical coil 33 when positioned oppositely along a center axis direction of the power supply side helical coil 33 with a space with respect to the power supply side helical coil 33, a power reception side loop antenna 52 arranged opposed to the power reception side helical coil 51 along the center axis direction of the power reception side helical coil 51 and electromagnetically-coupled to the power reception side helical coil 51, and a capacitor C2 connected to both ends of the power reception side helical coil 51.

The power reception side loop antenna 52 is formed by winding a conductive wire into a circular loop, and a center axis of the power reception side loop antenna 52 is arranged along a direction from the body portion of the motor vehicle 4 toward the road 2, i.e. a vertical direction. A load 7 such as a battery is connected to both ends of the power reception side loop antenna 52. In this embodiment, the power reception side loop antenna 52 has the same diameter as the above-described power reception side loop antenna 32. However, the present invention is not limited to this, and the diameter of the power reception side loop antenna 52 may be smaller than the diameter of the power reception side loop antenna 32.

The power reception side helical coil 51 is formed by a conductive wire wound into a circular helical shape. In the examples shown in Figs. 5 and 6, the number of turns N of the power reception side helical coil 51 is 5 turns as the power supply side helical coil 33. However, the present invention is not limited to this, and the number of turns can be between 3 turns to 6 turns. In this embodiment, the power reception side helical coil 51 may have the same diameter as the power supply side helical coil 33. However, the present invention is not limited to this, and the diameter of the power reception side helical coil 51 may be smaller than the diameter of the power supply side helical coil 33.

As shown in Fig. 6, the capacitor C2 for adjustment of resonant frequency is connected to both ends of the power reception side helical coil 51. The capacitors C1, C2 are provided for adjustment of resonant frequency, and the capacitance C of the power supply side helical coil 33 and the power reception side helical coil 51 is set to capacitance Cs so the resonance frequency is a desired frequency f0.

The power reception side helical coil 51 is arranged on the side of the power reception side loop antenna 52 adjacent to the road 2 and arranged coaxially with the power reception side loop antenna 52. Thus, the power reception side loop antenna 52 and the power reception side helical coil 51 are spaced from each other within the range that the power reception side loop antenna 52 and the power reception side helical coil 51 will be electromagnetically-coupled to each other, i.e. within the range that the induction current is induced at the power reception side loop antenna 52 when the alternating current flows in the power reception side helical coil 51.

According to the power supply system 1 described above, when the power reception part 5 of the motor vehicle 4 is moved toward the power supply part 3, and the power supply side helical coil 33 and the power reception side helical coil 51 are positioned oppositely along the center axis direction with a space between each other, the power supply side helical coil 33 and the power reception side helical coil 51 electromagnetically resonate with each other, thereby supplying power in a non-contact fashion from the power supply part 3 to the power reception part 5.

To be more specific, when the AC power is supplied to the power supply side loop antenna 32, this AC power is transmitted to the power supply side helical coil 33 through electromagnetic induction. In other words, the power is fed to the power supply side helical coil 33 through the power supply side loop antenna 32. When the power is transmitted to the power supply side helical coil 33, this power is transmitted wirelessly to the power reception side helical coil 51 through magnetic-field resonance. Furthermore, when the power is transmitted to the power reception side helical coil 51, thus power is transmitted to the power reception side loop antenna 52 through electromagnetic induction and supplied to the load 7 connected to this power reception side lop antenna 52.

According to the power supply system 1 described above, the number of turns of the power supply side helical coil 33 and the power reception side helical coil 51 is between 3 turns to 6 turns. Thus, even if there is error of maximum of ±10% in the capacitance of the capacitors C1, C2, the transmission efficiency at the desired resonance frequency f0 can be 80% or higher, thereby reducing the decrease in the transmission efficiency caused by variation in the capacitors C1, C2.

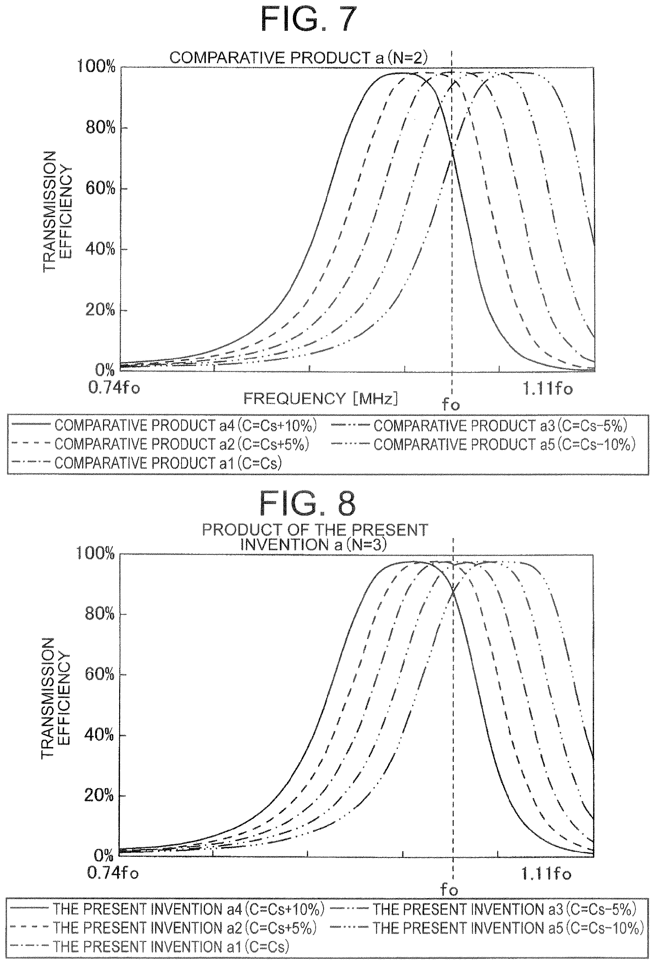

Next, the inventors of the present invention have simulated the transmission efficiency near the resonance frequency f0 for respective comparative products a1 through a5 which are the power supply system 1 having the number of turns of the power supply side helical coil 33 and the power reception side helical coil 51 of N=2. The comparative product a1 includes the capacitors C1, C2 having the capacitance of C=Cs with no error, the comparative products a2, a3 have C=Cs±5% with error of ±5%, and the comparative products a4, a5 have C=Cs±10% with error of ±10%. The results are shown in Fig. 7.

Furthermore, to verify the effect, the inventors of the present invention have simulated the transmission efficiency near the resonance frequency f0 for respective products of the present invention a1 through c5 which are the power supply system 1 having the number of turns of the power supply side helical coil 33 and the power reception side helical coil 51 of N=3, 4, 5. The products of the present invention a1, b1, c2 include the capacitors C1, C2 having the capacitance of C=Cs with no error, the products of the present invention a2, a3, b2, b3, c2, c3 have C=Cs±5% with the error of ±5%, and the products of the present invention a4, a5, b4, b5, c4, c5 have C=Cs±10% with the error of ±10%. The results are shown in Figs. 8 through 10.

As shown in Fig. 17, for the conventional product a1 (N=1) with no error in the capacitance C of the capacitors C1, C2, the transmission efficiency at the resonant frequency f0 is 94%, whereas for the conventional products a2, a3 (N=1) with the error of ±5%, the transmission efficiency is about 90% which is about 4% lower. Moreover, for the conventional products a4, a5 (N=1) with large error of ±10%, the transmission efficiency is about 50% which is 44% lower.

In contrast, as shown in Fig. 7, for the comparative product a1 (N=2) with no error in the capacitance C of the capacitors C1, C2, the transmission efficiency at the resonant frequency f0 is 98%, whereas for the comparative products a2, a3 (N=2) with the error of ±5%, the transmission efficiency is 95% which is only about 3% lower, i.e. the decrease in the transmission efficiency was reduced. Moreover, for the comparative products a4, a5 (N=2) with large error of ±10%, the transmission efficiency of about 72% was ensured, that means the decrease in the transmission efficiency was reduced to about 20% compared to the conventional product a1. Thus, it was found that the transmission efficiency can be improved compared to the conventional products a4, a5.

Furthermore, as shown Fig. 8, for the product of the present invention a1 (N=3) with no error in the capacitance C of the capacitors C1, C2 and for the products of the present invention a2, a3 (N=3) with the error of ±5%, the transmission efficiency at the resonant frequency f0 was 98%. Thus, it was found that there is almost no decrease in the transmission efficiency if the error is within about ±5%. Furthermore, even for the products of the present invention a4, a5 (N=3) with the large error of ±10%, the transmission efficiency of 87% can be ensured, that means the decrease in the transmission efficiency was reduced to about 10% compared to the product of the present invention a1. Thus, it was found that the transmission efficiency can be improved compared to the conventional products a4, a5.

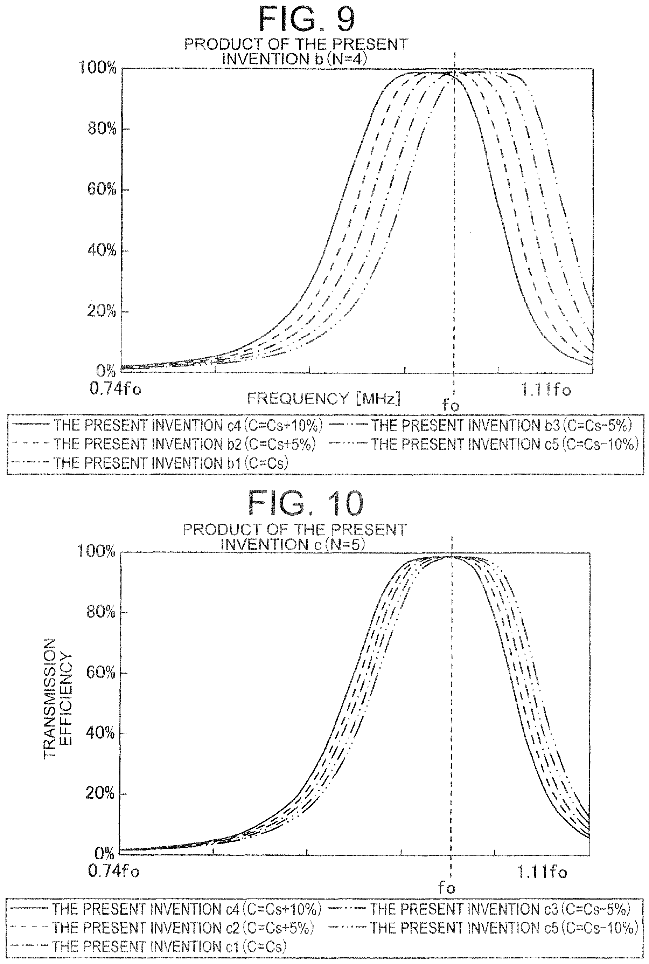

Furthermore, as shown in Fig. 9, for the product of the present invention b1 (N=4) with no error in the capacitance C of the capacitors C1, C2 and for the products of the present invention b2, b3 (N=4) with the error of ±5%, the transmission efficiency at the resonant frequency f0 was 98%. Thus, it was found that there is almost no decrease in the transmission efficiency if the error is about ±5%. Furthermore, even for the products of the present invention a4, a5 (N=2) with the large error of ±10%, the transmission efficiency of 96% can be ensured, that means the decrease in the transmission efficiency was reduced to about 2% compared to the product of the present invention a1. Thus, it was found that the transmission efficiency can be improved compared to the conventional products a4, a5.

Furthermore, as shown in Fig. 10, for the product of the present invention c1 (N=5) with no error in the capacitance C of the capacitors C1, C2, for the products of the present invention c2, c3 with the error in the capacitance C of the capacitors C1, C2 of ±5%, and for the products of the present invention C4, c5 with the error of ±10%, the transmission efficiency at the resonant frequency f0 was 98%. Thus, it was found that there is almost no decrease in the transmission efficiency if the error is within about ±10%.

Thus, it is clear from Figs. 8 through 10 that, the decrease in the transmission efficiency caused by the error in the capacitance C of the capacitors C1, C2 can be reduced with the increase in the number of turns N of the power supply side helical coil 33 and the power reception side helical coil 51.

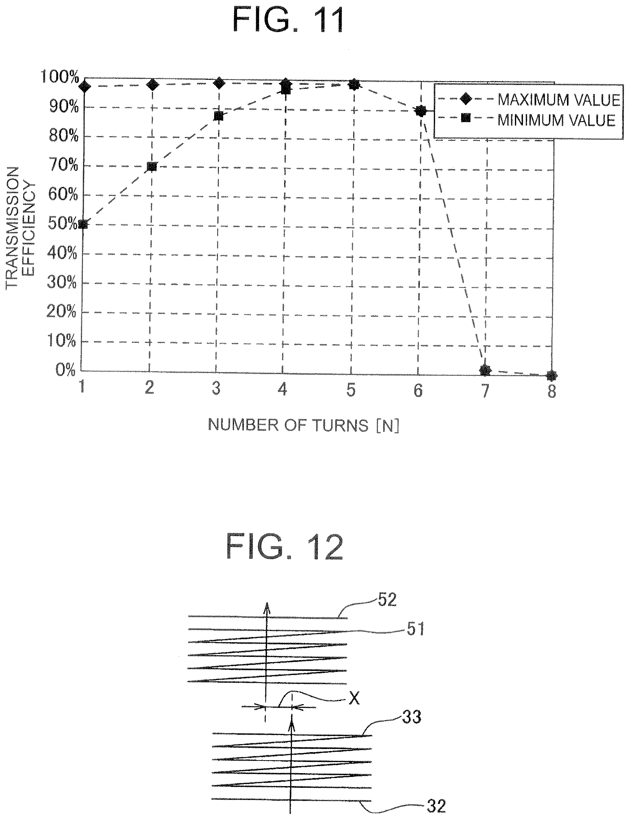

Furthermore, the inventors of the present invention simulated a maximum value (i.e. a value at C=Cs) and a minimum value (i.e. a value at C=Cs±10%) of the transmission efficiency at near the resonance frequency when the number of turns N of the power supply side helical coil 33 and the power reception side helical coil 51 of the power supply system 1 shown in Figs. 5 and 6 is changed from 1 turn to 8 turns. The results are shown in Fig. 11. It is clear from Fig. 11 that the decrease in the transmission efficiency caused by the error in the capacitance C of the capacitors C1, C2 can be reduced with the increase in the number of turns N of the capacitors C1, C2. However, when the number of turns is greater than N=6, the transmission efficiency had decreased significantly due to the change in the resonance frequency f0.

This can be explained as follows. In general, the resonance frequency f0 is expressed by the following equation (1),

$$f0=1/(2\pi \times sqrt(L \times (Cs+Cp))) \; [Hz] \quad (1),$$

wherein, L=inductor of the power supply side helical coil 33 and the power reception side helical coil 51, Cs=capacitance of the capacitors C1, C2 (lumped-constant capacitance), and Cp= parasitic capacitance of the power supply side helical coil 33 and the power reception side helical coil 51.

When the number of turns N of the power supply side helical coil 33 and the power reception side helical coil 51 is increased, the parasitic capacitance Cp is increased and the inductor L is increased. As a result, the lumped-constant capacitance Cs is decreased. Thus, it is contemplated that, since the rate of contribution of the lumped-constant capacitance Cs to the resonance frequency f0 in the equation (1) is decreased, the resonance frequency f0 is no longer effected by the variation in the lumped-constant capacitance Cs.

Furthermore, it is clear from Fig. 11 that, by setting the number of turns N of the power supply side helical coil 33 and the power reception side helical coil 51 to be at least 3 turns but no more than 6 turns, the transmission efficiency at the desired resonance frequency f0 can be equal to or greater than 80% even if there is the error in the capacitance of the capacitors C1, C2 of up to ±10%. Consequently, the decrease in the transmission efficiency caused by the variation in the capacitors C1, C2 can be reduced.

In the embodiment described above, the number of turns N of the power supply side helical coil 33 and the power reception side helical coil 51 is between 3 turns and 6 turns. However, the number of turns N is more preferably between 3 turns and 5 turns to obtain high transmission efficiency in a wide range. This is also preferable for the positional displacement x between the power supply side helical coil 33 and the power reception side helical coil 51 shown in Fig. 12. As shown in Fig. 12, the positional displacement x is an amount of displacement of the center axis Z1 of the power supply side helical coil 33 with respect to the center axis Z2 of the power reception side helical coil 51.

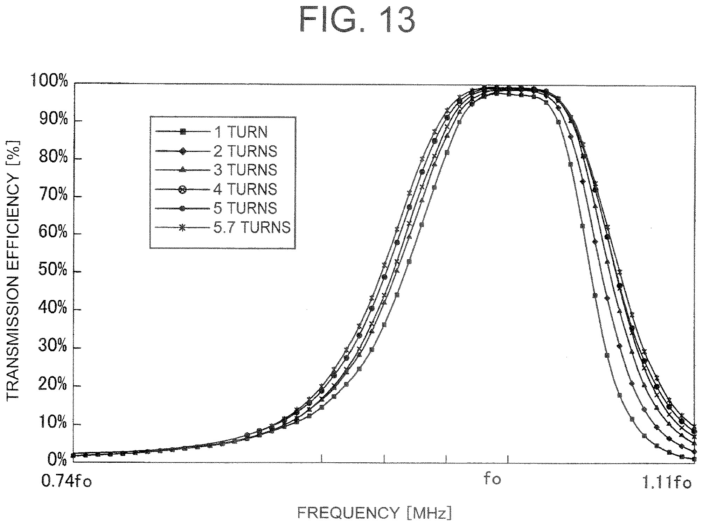

To verify the effect, the inventors of the present invention had simulated the transmission efficiency at near the resonance frequency f0 when the number of turns N of the power supply side helical coil 33 and the power reception side helical coil 51 is changed from 1 turn to 5.7 turns. The results are shown in Fig. 13. It is clear from Fig. 13 that, the frequency range with the high transmission efficiency is increased with the increase in the number of turns N.

Next, to verify the effect, the inventors of the present invention had simulated the transmission efficiency at near the resonance frequency f0 for the power supply system 1 with the number of turns N of the power supply side helical coil 33 and the power reception side helical coil 51 being 1 through 8 turns, and when there is generation of the positional displacement x of 0 through 0.75D (here, D is indicative of the diameter of the power supply side helical coil 33 and the power reception side helical coil 51). The results are shown in Fig. 14.

It is clear from Fig. 14 that, the decrease in the transmission efficiency caused by the positional displacement x can be reduced with the increase in the number of turns N compared to the conventional product with the number of turns N=1. However, when the number of turns is more than N=6, the resonance frequency f0 is changed, thus the transmission efficiency is decreased significantly.

Furthermore, it is clear from Fig. 14 that, when the number of turns N of the power supply side helical coil 33 and the power reception side helical coil 51 is at least 3 turns but no more than 5 turns, the transmission efficiency at the resonance frequency f0 can be equal to or greater than 60%, even if there is the positional displacement x of 0.5D.

According to the embodiment described above, the power supply side helical coil 33 and the power reception side helical coil 51 are wound into a circular shape; however, the present invention is not limited to this. The shape of the power supply side helical coil 33 and the power reception side helical coil 51 may be other than circle and may be rectangular or triangular shape.

The embodiments described herein are only representative embodiment of the present invention, and the present invention is not limited to these.

REFERENCE SIGN LIST

1 power supply system

3 power supply part (power supply unit)

5 power reception part (power reception unit)

33 power supply side helical coil (power supply side coil)

51 power reception side helical coil (power reception side coil)

C1 capacitor

C2 capacitor

## Claims

1. A power supply system comprising:

   a power supply unit (3) including a power supply side coil (33) to which electric power is supplied; and
   a power reception unit (5) including a power reception side coil (51) arranged to electromagnetically resonate with the power supply side coil (33) and receive the electric power from the power supply side coil (33),
   **characterized in that**
   impedances of the power supply unit (3) and the power reception unit (5) are matched at a position where a center axis (Z1) of the power supply side coil (33) is displaced with respect to a center axis (Z2) of the power reception side coil (51).

2. The power supply system according to claim 1, wherein the power supply side coil (33) and the power reception side coil (51) are wound into a circular shape.

3. The power supply system according to claim 1 or 2, wherein impedances of the power supply unit (3) and the power reception unit (5) are not matched at a position where the center axis (Z1) of the power supply side coil (33) is coincident with the center axis (Z2) of the power reception side coil (51).

## Patentansprüche

1. Energieversorgungssystem, umfassend:

   eine Energieversorgungseinheit (3), enthaltend eine energieversorgungsseitige Spule (33), der elektrische Energie zugeführt wird; und
   eine Energieempfangseinheit (5), enthaltend eine energieempfangsseitige Spule (51), eingerichtet mit der energieversorgungsseitigen Spule (33) elektromagnetisch in Resonanz zu sein und die elektrische Energie von der energieversorgungsseitigen Spule (33) zu empfangen,
   **dadurch gekennzeichnet, dass**
   Impedanzen in der Energieversorgungseinheit (3) und der Energieempfangseinheit (5) bei einer Position angepasst sind, bei der eine Mittelachse (Z1) der energieversorgungsseitigen Spule (33) gegenüber einer Mittelachse (Z2) der energieempfangsseitigen Spule (51) versetzt ist.

2. Energieversorgungssystem nach Anspruch 1, wobei die energieversorgungsseitige Spule (33) und die energieempfangsseitige Spule (51) kreisförmig gewickelt sind.

3. Energieversorgungssystem nach Anspruch 1 oder 2, wobei Impedanzen der Energieversorgungseinheit (3) und der Energieempfangseinheit (5) bei einer Position nicht angepasst sind, bei der die Mittelachse (Z1) der energieversorgungsseitigen Spule (33) mit der Mittelachse (Z2) der energieempfangsseitigen Spule (51) zusammenfällt.

## Revendications

1. Système d'alimentation électrique comprenant:

   une unité d'alimentation (3) comprenant une bobine côté alimentation (33) à laquelle l'alimentation électrique est fournie; et
   une unité de réception d'alimentation (5) comprenant une bobine côté réception d'alimentation (51) agencée pour résonner de manière électromagnétique avec la bobine côté alimentation (33) et recevoir l'alimentation électrique provenant de la bobine côté alimentation (33),
   **caractérisé en ce que**
   les impédances de l'unité d'alimentation (3) et de l'unité de réception d'alimentation (5) correspondent à une position à laquelle un axe central (Z1) de la bobine côté alimentation (33) est déplacé par rapport à un axe central (Z2) de la bobine côté réception d'alimentation (51).

2. système d'alimentation électrique selon la revendication 1, dans lequel la bobine côté alimentation (33) et la bobine côté réception d'alimentation (51) sont enroulées en une forme circulaire.

3. Système d'alimentation électrique selon la revendication 1 ou la revendication 2, où les impédances de l'unité d'alimentation (3) et de l'unité de réception d'alimentation (5) ne correspondent pas à une position à laquelle un axe central (Z1) de la bobine côté alimentation (33) est déplacé par rapport à un axe central (Z2) de la bobine côté réception d'alimentation (51).

# FIG. 1

# FIG. 2

FIG. 3A

FIG. 3B

# FIG. 4

EP 2 728 710 B1

# FIG. 5

# FIG. 6

# FIG. 7

COMPARATIVE PRODUCT a (N=2)

TRANSMISSION EFFICIENCY

FREQUENCY [MHz]

———— COMPARATIVE PRODUCT a4 (C=Cs+10%)   —·····— COMPARATIVE PRODUCT a3 (C=Cs-5%)
– – – – COMPARATIVE PRODUCT a2 (C=Cs+5%)   —····— COMPARATIVE PRODUCT a5 (C=Cs-10%)
—·–·– COMPARATIVE PRODUCT a1 (C=Cs)

# FIG. 8

PRODUCT OF THE PRESENT INVENTION a (N=3)

TRANSMISSION EFFICIENCY

———— THE PRESENT INVENTION a4 (C=Cs+10%)   —·····— THE PRESENT INVENTION a3 (C=Cs-5%)
– – – – THE PRESENT INVENTION a2 (C=Cs+5%)   —····— THE PRESENT INVENTION a5 (C=Cs-10%)
—·–·– THE PRESENT INVENTION a1 (C=Cs)

# FIG. 9

PRODUCT OF THE PRESENT
INVENTION b (N=4)

——— THE PRESENT INVENTION c4 (C=Cs+10%)  —··— THE PRESENT INVENTION b3 (C=Cs-5%)
- - - - THE PRESENT INVENTION b2 (C=Cs+5%)  —···— THE PRESENT INVENTION c5 (C=Cs-10%)
—·—·— THE PRESENT INVENTION b1 (C=Cs)

# FIG. 10

PRODUCT OF THE PRESENT
INVENTION c (N=5)

——— THE PRESENT INVENTION c4 (C=Cs+10%)  —··— THE PRESENT INVENTION c3 (C=Cs-5%)
- - - - THE PRESENT INVENTION c2 (C=Cs+5%)  —···— THE PRESENT INVENTION c5 (C=Cs-10%)
—·—·— THE PRESENT INVENTION c1 (C=Cs)

# FIG. 11

# FIG. 12

## FIG. 13

EP 2 728 710 B1

# FIG. 14

NUMBER OF TURNS [N]

- - ■ - - DIS PLACEMENT 0
- - ♦ - - DIS PLACEMENT 0.1254D
- - ▲ - - DIS PLACEMENT 0.25D
- - ● - - DIS PLACEMENT 0.375D
- - ★ - - DIS PLACEMENT 0.5D
- - × - - DIS PLACEMENT 0.625D
- - ＼ - - DIS PLACEMENT 0.75D

# FIG. 15
## PRIOR ART

# FIG. 16
## PRIOR ART

# FIG. 17
## PRIOR ART

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010115474 A1

- US 2010123452 A1

**Non-patent literature cited in the description**

- **A. KURS ; A. KARALIS ; R. MOFFATT ; J.D. JOANNOPOULOUS ; P. FISHER ; M. SOLJACIC.** Wireless power transfer via strongly coupled magnetic resonances. *Sience,* 06 July 2007, vol. 317, 83-86

- **M. SOLJACIC ; A. KARALIS ; J. JONNOPOULOS ; A. KURS ; R. MOFFATT ; P. FISGER.** Development of technology for wireless power transfer - Lighting up 60W bulb in experiment. *Nikkei Electronics,* 03 December 2007